# EUROPEAN PATENT SPECIFICATION

(11) **EP 3 899 414 B1**
(45) Date of publication and mention of the grant of the patent: **28.08.2024**
(21) Application number: 19828294.9
(22) Date of filing: 17.12.2019
(51) Int. Cl.: F42C 5/00, F42C 15/32, F42C 15/40, F42B 12/62, F42B 12/20, F42B 12/36, F42B 30/08, F42B 21/00, F42C 11/00, F42C 3/00, F42C 13/08, F42C 7/00, F42B 10/48, F42C 9/00, F42C 13/06

(54) **IMPROVEMENTS RELATING TO APPARATUS AND METHOD SUITABLE FOR USE WITH A MUNITION**
VERBESSERUNGEN IN BEZUG AUF EINE VORRICHTUNG UND EIN VERFAHREN ZUR VERWENDUNG MIT EINER MUNITION
AMÉLIORATIONS CONCERNANT UN APPAREIL ET UN PROCÉDÉ APPROPRIÉS POUR UNE UTILISATION AVEC UNE MUNITION

(30) Priority: 19.12.2018 GB 201820705; 19.12.2018 EP 18275186; 04.09.2019 GB 201912696; 05.12.2019 GB 201917754; 05.12.2019 EP 19275141; 05.12.2019 GB 201917753; 05.12.2019 EP 19275140
(43) Date of publication of application: 27.10.2021
(73) Proprietor: BAE SYSTEMS plc, London SW1Y 5AD (GB)
(72) Inventor: CARR, Andrew, Portsmouth, Hampshire PO3 5PQ (GB); THOMSON, Murray, Portsmouth, Hampshire PO3 5PQ (GB); GIRLING, Timothy Keith, Portsmouth, Hampshire PO3 5PQ (GB); HUCKER, Martyn John, Usk, Monmouthshire NP15 1XL (GB)
(74) Representative: BAE SYSTEMS plc Group IP Department
(86) International application number: PCT/GB2019/053583
(87) International publication number: WO 2020/128453

(56) References cited:
- FR-A1- 2 640 371
- US-A- 2 803 135
- US-A- 2 955 558
- US-A- 4 703 693

## Description

The present invention relates generally to a munition or munition assembly, and in particular to a munition or munition assembly that is adapted to be launched, into the air, from a gun barrel. A related submunition, assembly, method, and reconnaissance projectile assembly and reconnaissance sub-projectile are also provided. Apparatus and methods suitable for use with such munitions and submunitions, and suitable for more general use, are also provided.

For the purposes of this disclosure, aspects, embodiments, and general description and discussion of munitions, in terms of technical details or associated functionality, applies equally to submunitions. In some instances, for certain functionality, the term munition will be understood to cover the term submunition. For example, this is in instances where it is not important if the functionality is linked to the "sub" nature of the submunition, but is instead linked to the explosive nature of the munition in general. In other words, it may not be necessary for the munition to be expelled from a carrier, in order to embody the inventive concept that is being described. This is clear from the disclosure as a whole.

Munitions are provided in a number of different forms, for a number of different applications. Typically, a particular munition will be used for a particular application or intention. A good example of this is when an application involves engaging with or generally interacting with an underwater object (e.g. a target).

When engaging an underwater target, a typical approach is to use a depth charge. The depth charge is dropped off the side of a vessel, or from a helicopter or similar, and the depth charge then descends in the water to a predetermined depth where the depth charge is activated (i.e. detonates). Ideally, this depth will be in the general vicinity of the object or target to be engaged, to damage or disable that target. While engaging a target with one or more depth charges has been relatively commonplace for decades, and is often effective, there are disadvantages. One of the main disadvantages is range. That is, while the depth charge may inflict the required damage on the underwater target, this may be difficult or impossible to achieve if the underwater target is not located immediately below the vessel engaged in that target, but is instead located some distance away from the vessel (e.g. measured across the surface of the water), for example hundreds of metres, or kilometres. Additionally, it may be difficult to engage the target with multiple depth charges simultaneously, or simultaneously from multiple vessels. Also, any explosion caused by the depth charge may, if in the vicinity of the vessel itself, risk damaging the actual vessel that deployed the depth charge.

While the use of helicopters can of course significantly increase the range of the use of depth charge from the vessel deploying the depth charge or helicopter, this then necessarily involves the use of a helicopter, which can be expensive or risky. Of course, it is not practical, and sometimes not possible, to use one or more, or a swarm, of helicopters in order to deploy multiple, or a swarm, of depth charges at any significant distance from the vessel. Also, even though helicopters are fast moving, it may take a significant amount of time for a helicopter to reach a target location, and deploy the depth charge. This is particularly the case when the helicopter is not already in flight, when a command or instruction to engage is issued.

Another approach involves the use of mortar bombs. Mortar bombs may be launched from the deck of a vessel, and into the surrounding water, where the mortar bombs then descend to a particular depth and explode to disable or damage the underwater target. While these mortar bombs perhaps have an increased range in comparison with the use of depth charges, their explosive capability is perhaps not as significant as a depth charge. Also, the firing accuracy is not ideal, and the range of the mortar bomb, is still limited.

A yet further approach to engaging underwater targets is the use of torpedoes, for example deck-launched torpedoes launched from the deck of a vessel, or those launched from a submarine, helicopter or airplane. The use of torpedoes might overcome some of the problems discussed above with regard to range, mainly because torpedoes are self-propelled. However, torpedoes are ultimately too expensive to be used speculatively, or too expensive to use multiple torpedoes at any one time to cause multiple explosions in or around the vicinity of an expected or determined location of the target.

Additionally, even when a munition is fired from a gun, achieving significant range with great accuracy, a natural (e.g. ballistic) trajectory will result in impact with a surface of a body of waterthat is likely to cause damage to the munition, a significant change of course of the munition, or generally result in the munition not functioning as perhaps initially intended.

It is also known to implement hydrostatic-pressure, for example depth, based functionality with munitions. For example the functionality might relate to when an explosive charge of the munition is to be triggered at a certain depth. In crude examples, the pressure-based triggering of the functionality could be based on a timing of or for which the munition descends through the water, or even by the munition physically impacting a particular object at a particular depth. In a more advanced implementation, pressure sensors may be used to implement the pressure-based functionality. The cruder implementations are often not subtle of sophisticated enough to meet required needs, for example in terms of accuracy, reliability, or general functionality of the implementation. More advanced approaches may be impractical, too costly or have negative impacts on other aspects of the munition. Perhaps more generally, for any object moveable through a fluid, which may be a gas or an air, it is desirable to be able to provide a reliable, cost effective approach to pressure-sensing for determining a hydrostatic pressure exerted on the object that is in that fluid. This is so that pressure-based functionality can be better implemented

Examples of the background art are shown in, for instance: FR2640371, which discloses enhancements to mine igniters; and US2803135, which discloses a fixed depth pressure detector or indicator. Another example of the background art is shown in US2955558A, which discloses a torpedo with a hydrostatic pressure sensor.

It is an example aim of example embodiments of the present invention to at least partially avoid or overcome one or more disadvantages of the prior art, whether identified herein or elsewhere, or to at least provide a viable alternative to existing apparatus and methods.

In the following description, reference to "embodiment(s)", or "example(s)", or "aspect(s)", or similar, are to be understood as referring to embodiments, or examples, or aspects, of the invention only to the extent that these fall within the scope of the accompanying independent claim(s). Otherwise, such description is provided to aid understanding of features of the claimed invention.

According to a first aspect of the invention, there is provided a projectile in accordance with independent claim 1.

The outer housing may be a substantially sealed outer housing.

The system may be arranged to at least partially arm a fuze of the projectile, using the obtained indication of hydrostatic pressure.

The system may be arranged to trigger an explosive charge of the projectile, using the obtained indication of hydrostatic pressure.

The system may be arranged to transmit the obtained indication of hydrostatic pressure away from the projectile.

The projectile may be a munition.

The munition may be a submunition.

The projectile may be a reconnaissance projectile.

The projectile may be suitable for moving through water, and the hydrostatic pressure may be a water pressure.

According to a second aspect of the invention, there is provided an assembly, the assembly comprising: a carrier for an projectile, the carrier comprising a cavity in which the projectile is located; and a projectile according to the first aspect, carried by the carrier in the cavity, the projectile arranged to be controllably expelled from the carrier, and wherein the assembly is adapted to be launched, and where the projectile is then arranged to be controllably expelled from the carrier; and the projectile is adapted to perform a hydrostatic pressure related function.

The projectile may be a submunition having a submunition fuze and/or a submunition explosive charge, and the fuze is arranged to be at least partially armed, or the submunition explosive charge is arranged to be triggered, dependent on the obtained indication of the hydrostatic pressure.

The assembly may be adapted to be launched, into the air, from a gun barrel.

The projectile may then be arranged to be controllably expelled from the carrier and enter a body of water. The projectile is adapted to perform a hydrostatic pressure related function when in the water. If a submunition, the submunition fuze may be adapted to trigger the submunition explosive charge underwater.

According to a third aspect of the invention, there is provided a method of obtaining an indication of a hydrostatic pressure on a projectile in accordance with independent claim 12.

More generally, any one or more features described in relation to any one aspect may be used in combination with, or in place of, any one or more feature of any one or more other aspects of the invention, unless such replacement or combination would be understood by the skilled person to be mutually exclusive, after a reading of the present disclosure.

For a better understanding of the invention, and to show how embodiments of the same may be carried into effect, reference will now be made, by way of example, to the accompanying diagrammatic Figures in which:
Figure 1 schematically depicts a vessel launching a munition into the air, from a gun barrel, in accordance with an example embodiment;
Figure 2 shows the munition of Figure 1 being directed towards a body of water, in accordance with an example embodiment;
Figure 3 schematically depicts different approaches to slowing the munition in the air, before entering into the water, in accordance with example embodiments;
Figure 4 schematically depicts how the fuze may be adapted to initiate the main charge of the munition, under the water, in accordance with a particular criteria, according to example embodiments;
Figure 5 schematically depicts how the fuze may be adapted to initiate the main charge of the munition, under the water, in accordance with another criteria, according to other example embodiments;
Figure 6 schematically depicts how the fuze may be adapted to initiate the main charge of the munition, under the water, in accordance with another criteria, according to other example embodiments;
Figure 7 schematically depicts an artillery shell according to an example embodiment, including a munition according to an example embodiment;
Figure 8 schematically depicts general methodology associated with the implementation of example embodiments;
Figure 9 schematically depicts a reconnaissance projectile, in accordance with an example embodiment;
Figure 10 schematically depicts operating principles associated with the reconnaissance projectile of Figure 9, according to an example embodiment;
Figure 11 shows a munition assembly, comprising a carrier and a submunition, in accordance with an example embodiment;
Figure 12 shows an exploded view, and/or functionality, of the munition assembly of Figure 11, in accordance with an example embodiment;
Figure 13 shows a submunition of the munition assembly of Figure 11, being directed towards a body of water, in accordance with an example embodiment;
Figure 14 shows a more detailed, cross-section, view of the munition assembly of Figure 11, in accordance with an example embodiment;
Figure 15 shows a more simplistic view of the submunition of Figure 14, but with a fuze system comprising a strain gauge, in accordance with example embodiments;
Figure 16 schematically depicts principles underlying the operation of the system of Figure 15; and
Figure 17 schematically depicts general methodology associated with the system principles shown in Figures 15 and 16.

As discussed above, there are numerous disadvantages associated with existing apparatus and methods for engaging underwater targets. These range from the limited range of some existing munitions used for such purposes, to the limited accuracy of existing munitions, or the significant expense associated with existing munitions. In general, there is exists no relatively inexpensive, rapidly deployable, and yet long-range and accurate, munition, or related assembly or methodology, for engaging or generally interacting with underwater objects (e.g. targets).

According to the present disclosure, it has been realised that the problems associated with existing approaches can be overcome in a subtle but effective and powerful manner. In particular, the present disclosure provides a munition. The munition comprises an explosive charge and a fuze. The munition is adapted to be launched, into the air. Significantly, the munition is adapted to be launched from a gun barrel. This means that the munition typically (and practically likely) includes, or is at least used in conjunction with, a propelling explosive, and is capable of being explosively propelled and withstanding such explosive propulsion. This is in contrast with, for example, a depth charge, or torpedo. Being launched from a gun barrel, this is also in contrast with a mortar bomb. The munition is adapted to be launched and then enter a body of water, typically within which body of water a target or object to be engaged would be located. The fuze of the munition is adapted to trigger the explosive charge of the munition under water, for example in accordance with pre-set criteria. The use of a gun barrel also ensures high degree of accuracy in terms of ranging and general targeting.

The disclosure is subtle but powerful. The disclosure is subtle because it perhaps takes advantage of some existing technologies, in the form of firing a munition from a gun barrel. This means that the range of the munition would be hundreds of metres, or even kilometres, overcoming range problems associated with existing apparatus or methodology. At the same time, the munition will typically be a projectile, therefore being unpropelled and/or including no form of self-propulsion. This means that the munition is relatively simple and inexpensive. Altogether then, this means that the munition according to example embodiments can be used to accurately, cheaply, effectively, and generally efficiently engage with targets located at quite some distance from an assembly (e.g. a platform, vessel, vehicle, and so on, or a related gun) that launches the projectile. Also, the use of a munition that is capable of being launched from a gun barrel means that multiple munitions can be launched very quickly in succession from the same gun barrel, or in succession and/or in parallel from multiple gun barrels, optionally from different assemblies, or optionally being targeted onto or into the same location/vicinity of the same body of water. Again then, target engagement efficiency and effectiveness may be increased, in a relatively simple manner.

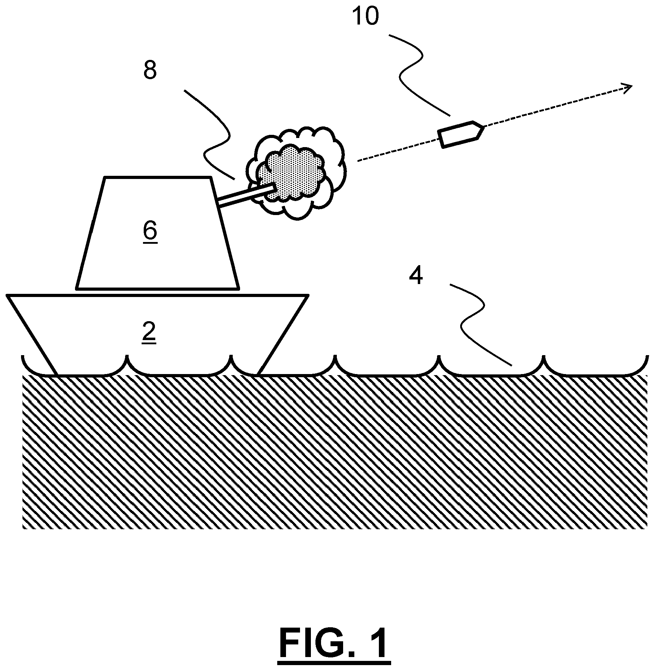

Figure 1 schematically depicts an assembly in accordance with an example embodiment. In this example, the assembly comprises a vessel 2 located on a body of water 4. The vessel comprises a gun 6 having a gun barrel 8. In another example, the assembly need not include a particular vehicle, and could simply comprise a gun.

The munition 10 is shown as being explosively launched into the air. As discussed above, this gives the munition 10 significant range, and accuracy at range.

Prior to being launched into the air, the munition 10 (or more specifically its fuze) might be programmed in some way. The programming might take place within the gun 6, within the barrel 8, or even within a particular range after launch of the munition 10, for example by a wireless transmission or similar. The programming might be undertaken to implement or change particular fuze criteria, for example to trigger explosive within the munition 10 in accordance with particular criteria. This will be explained in more detail below. Typically, in order to achieve this programming, the munition 10 will comprise a programmable fuze. That is, the fuze is able to be configured.

As is typical for munitions fired from a gun barrel, the munition will typically be arranged to be launched from a smooth bore gun barrel. Optionally, the munition may be fin-stabilised. Alternatively, the munition may be arranged to be launched from a rifled bore. The exact configuration will be dependent on the required application.

As discussed throughout, care will need to be undertaken to ensure that the combination of munition properties (e.g. size, weight, shape and so on) and launch specifications (e.g. explosive propulsion) is such that the munition 10 does not explode on launch. This might require particular care to be given to the explosive resistance of the munition 10, or at least constituent parts located within the munition, typically associated with initiating an explosion of the munition 10. Such concepts will be known or derivable from munitions technologies typically involved in gun-based launching.

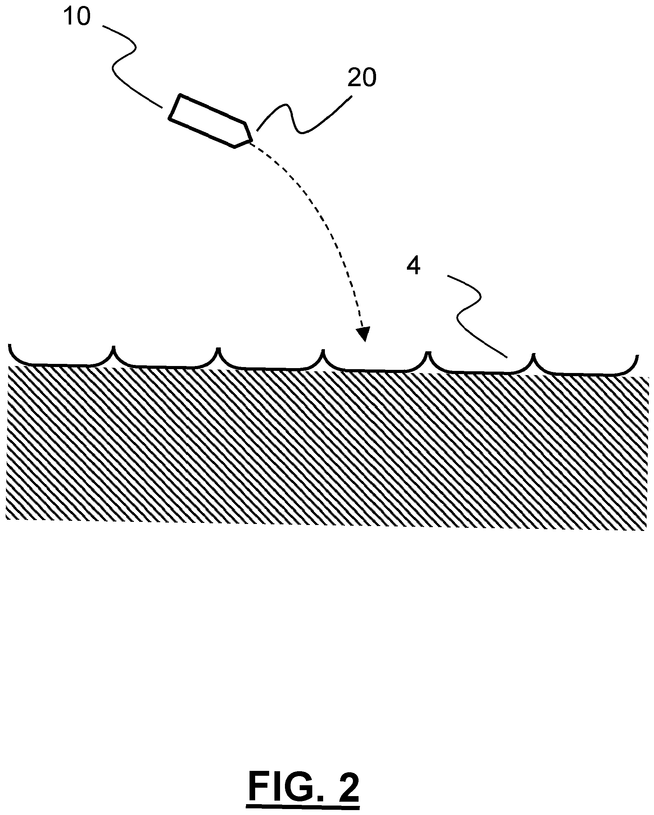

Figure 2 shows the munition as it is directed to and is about to enter the body of water 4. Having been explosively launched from a gun barrel 8, the munition 10 will enter the body of water 4 with significant speed. In a practical implementation, care will need to be undertaken to ensure that the combination of munition properties (e.g. size, weight, shape and so on) and impact speed with the water 4 is such that the munition 10 does not explode on impact. This might require particular care to be given to the impact resistance of the munition 10, or at least constituent parts located within the munition, typically associated with initiating an explosion of the munition 10.

In one example, a simple but effective feature which may assist in this regard is the head or tip 20 of the munition being ogive-shaped or roundly-shaped or tapering, in accordance with the typical shape of munitions. Again, this is in contrast with a depth charge or similar. However, this may not be sufficient in isolation, or even in combination with structural impact-resistant features of a munition, to prevent explosion of the munition 10 on impact with the water, or to damage the munition such that it does not work satisfactorily under the water 4.

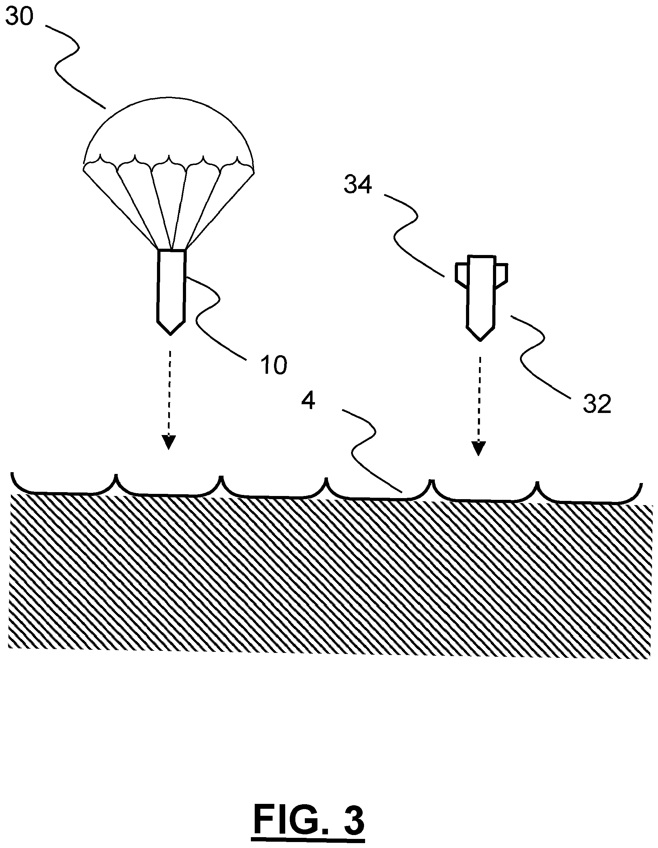

Figure 3 shows that in addition to, or alternatively to, an impact resistant or accommodating structure of the munition 10, the munition 10 may be provided with a deployable configuration that is arranged, when deployed, to slow the munition 10 in the air before entry into the water 4. In order to successfully engage with an underwater target described herein, the speed of decent of the munition down, through the water 4 to the target may be less important than the speed of delivery of the munition from the gun to the location at/above the target. In other words, the munition 10 does not need to enter the water 4 at a particularly high velocity. Therefore, deceleration of the munition 10 prior to entering the water 4 is acceptable, and may actually be desirable. That is, slowing the munition 10 prior to entering the water 4 may be far simpler or easier to achieve than designing the munition to withstand high speed impact with the water 4.

This is because such a design might mean that the cost of the munition is excessive, or that the weight of the munition is excessive, or such that the space within the munition for important explosive material is reduced. In other words, some form of air brake might be advantageous.

Figure 3 shows that, in one example, the deployable configuration could comprise a parachute 30. The parachute could be deployed after a certain time from launch of the munition 10, or could, with appropriate sensing or similar, be deployed upon particular distance proximity sensing with respect to the water 4.

In another example, a similar munition 32 is shown. However, this similar munition 32 comprises a different deployable configuration in the form of one or more deployable wings or fins 34. These deployable wings or fins 34 may be deployed in the same manner as the parachute 30 previously described. The wings or fins 34 might optionally provide a degree of auto rotation to slow or further slow the munition 32. As discussed above, it is desirable for the munition to reach the location of the target object, or its surrounding area quickly and effectively, while at the same time being relatively inexpensive and having maximum effectiveness. It is therefore desirable not to pack the munition with complicated or advanced guiding or directionality mechanisms, which might be used to control the directionality of the descent of the munition. However, in some examples the fins and/or wings 34 previously described may be controllable to provide directional control of the descent of the munition 32, for example via a moveable control surface provided in or by the fins or wings. Such control is typically not to be used during projectile-like flight of the munition 32, for example immediately after launch, but instead might be used for a degree of tuning control of the descent of the projectile into the body of water. This might improve engagement accuracy and effectiveness with a target located in the body of water 4. However, as alluded to above, in other examples the munition according to example embodiments may be free of such directional (descent) control, to ensure that the cost and complexity of the munition is minimised, and such that any related cost or space budget is taken up with more core aspects, such as volume of explosive.

After entering the body of water, the munition may be arranged to retract or dispose of the deployable configuration, so that the deployable configuration does not slow (or slow to too great an extent) the descent of the munition toward the target. For similar reasons, the munition might be free of any such deployable configuration, such that there is no impact on descent in the water. Descent through the water may need to be as fast as possible (e.g. to avoid the object moving to avoid the munition).

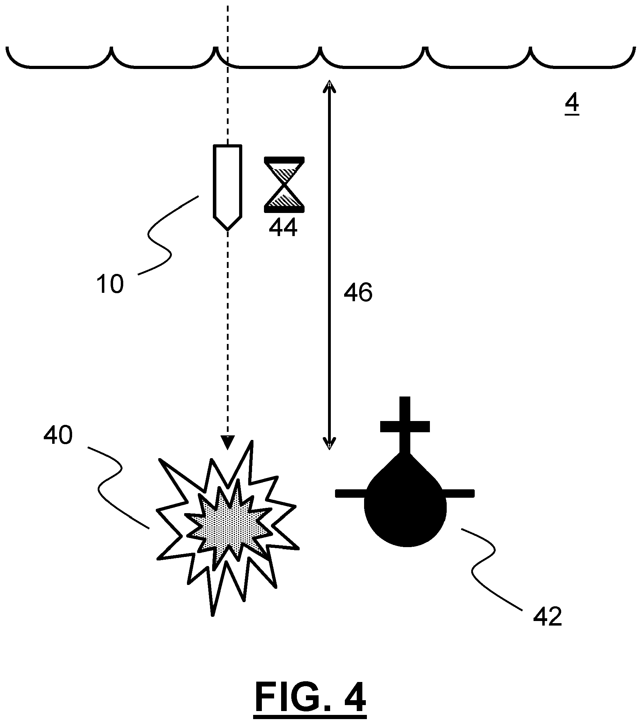

After entering the body of water, the munition will descend within the body of water. The fuze within the munition is adapted to trigger the explosive charge within the munition in the water (that is under the water surface). This triggering can be achieved in one of a number of different ways. Figures 4 to 6 give typical examples.

Figure 4 shows that the fuze may be adapted to trigger 40 explosive within the munition 10 in order to successfully and effectively engage an underwater target 42. This might be achieved by triggering the explosive charge after a particular time 44, for example from one or more of a combination of launch from the gun barrel described above, and/or a predetermined time period after entering the water 4. This time period will typically equate to a particular depth 46 within the water 4 (e.g. based on expected or calculate rate of descent). Alternatively, the triggering 40 may occur at the particular depth 46 in combination with or irrespective of the timing 44. For example, an alternative or additional approach might involve the direct detection of depth (via one or more sensors or similar). Depth may be detected based on time, as above, or perhaps based on water pressure under the surface, the salinity of the water, the temperature of the water, or even at a predetermined speed-of-sound in the water. All of these may be indicative of depth within the water, for example which may be known in advance from mapping of the area, and/or sensed by the munition 10 via one or more sensors when descending through the water.

Of course, the fuze may be also be adapted to trigger the explosive charge upon impact with the target 42. However, it may be safer to employ some form of depth-activation, so that the munition explodes at/near the depth of the target, avoiding possible unintentional explosions at or near objects that are not targets.

As above, the fuze may be programmed with such criteria, or related criteria necessary for the fuze to trigger the explosive as and when intended.

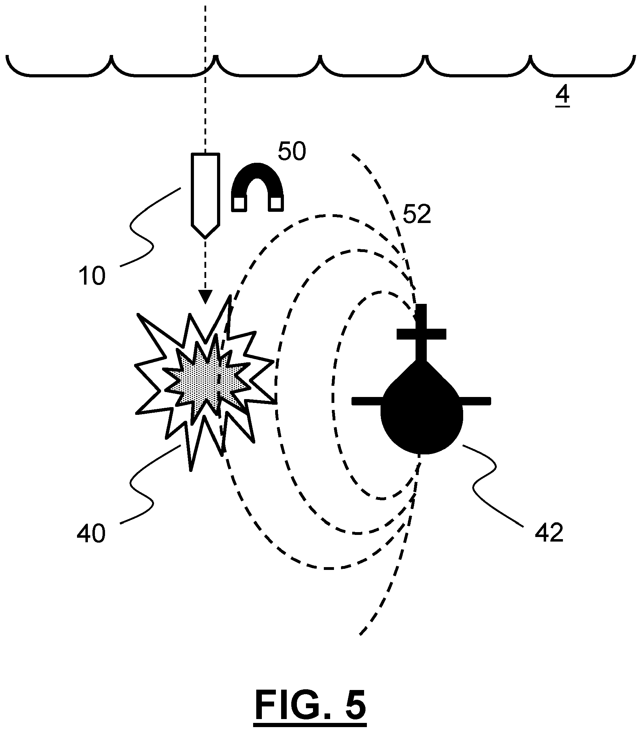

Figure 5 shows a different adaptation for triggering 40 an explosive charge of the munition 10 under the water, this time upon magnetic detection 50 of a target magnetic signature 52. In a crude sense, the target magnetic signature could simply be the detection of anything magnetic, indicating the presence of a magnetic or magnetisable structure. For instance, once a detected magnetic a field strength is above a relevant threshold, the munition 10 might explode. In a more sophisticated manner, it may be known or derivable in advance to determine what the expected magnetic signature 52 of the particular target 42 might be, might look like, or might approximate to. This might equate to field strength, or field lines, or changes therein. In this example, the munition 10 might not be triggered 40 to explode until the magnetic detection 50 detects a very particular magnetic signature 52, and not simply any magnetic field or change therein.

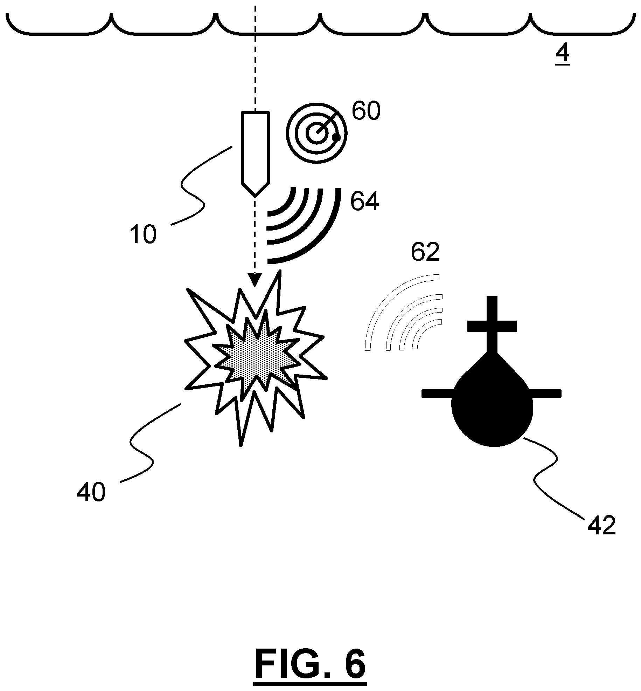

While Figure 5 discusses the use of magnetic fields, much the same principle may be used to detect electric field signatures. Figure 6 shows another example of triggering. In this example, the triggering 40 of the explosive charge in the munition 10 is undertaken based on the detection of pressure waves in the water 4, thereby implementing a sonar-like system 60. The system may be implemented in one of a number of different ways. In one example, the munition 10 may be arranged to detect a pressure wave 62 emanating from target object 42. This could be a sonar pulse 62 originating from the object 42, or simply detection of sound generated by the object 42, or could instead be a reflection 62 of a sonar pulse 64 originating from the munition 10. That is, the projectile 10 may not only detect pressure waves, but may emit pressure waves. As with the magnetic field examples given above, the explosive charge may be triggered 40 when a target sonar signature is detected 60, and this could be when any pressure wave is detected, or more likely when a pressure wave above a certain threshold is detected, or when a particular pressure wave or a series of pressure waves is detected which is indicative of the presence of a particular target 42.

In general, the munition may be able to detect or infer entry into the water, or making contact with the water. This might be useful in initiating or priming fuze activity, for example starting a timer, taking a base or initial reading of pressure, salinity, temperature, and so on (or any relevant criteria), or anything which may assist in the subsequent use of the fuze to trigger the explosive. This sensing or inference could be via an environmental sensor or similar that is (already) present in order to perform another function, for example those discussed or alluded to above. Alternatively, the sensing or inference could be via a dedicated sensor, for example a dedicated impact or water/moisture sensor, or temperate sensor, pressure sensor, salinity sensor, and so on. In general terms, the munition may be able to detect or infer entry into the water, or making contact with the water, for safety reasons, where some (e.g. explosive) function is prevented prior to water contact/entry.

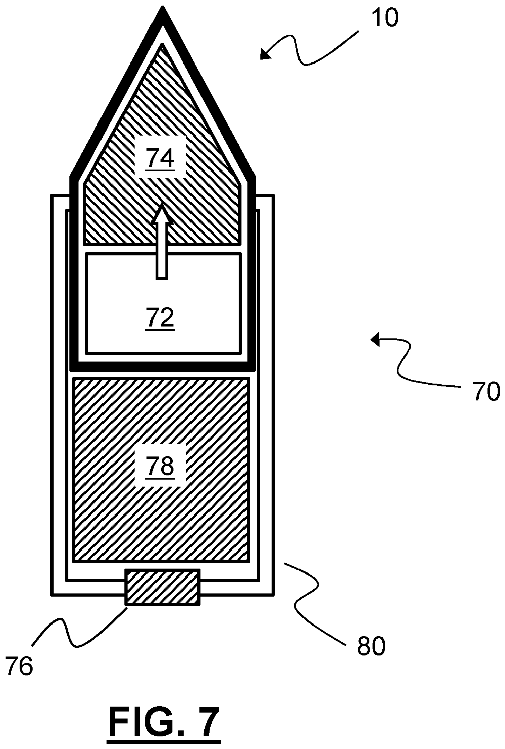

As discussed above, a main principle discussed herein is that the munition is adapted to be launched, into the air, from a gun barrel. This gives good range, and good targeting accuracy, good engagement speed, all at relatively low cost. To this extent, the munition may be described as, or form part of, an artillery shell. Figure 7 shows such an artillery shell 70. The artillery shell 70 comprises a munition 10 according to any embodiment described herein. The munition 10 will typically comprise a fuze 72 (likely a programmable fuze, as discussed above), which is adapted to trigger an explosive charge 74 also located within a munition. The artillery shell 70 will also comprise a primer 76 and an explosive propellant 78 which may be cased (as shown) or bagged. A casing 80 might also be provided, to hold the munition 10, explosive 78, and primer 76.

In another example, and typical in munitions, the fuze could be located in the nose of the munition (e.g. as opposed to behind the nose as shown in Figure 7).

It is envisaged that a practical implementation of concepts of the present disclosure would take the form of the artillery shell of Figure 7, or something similar to that depiction, as opposed to a munition in isolation. In any event, as discussed above, the munition according to the present disclosure is capable of withstanding explosive propulsion-based launch from a gun barrel, in contrast with for instance a depth charge or torpedo. The munition and/or artillery shell (which could be the same thing) will typically have a diameter of 200mm or less, in contrast with depth charges. The gun barrel-munition/artillery shell assembly typically will be such that the munition has a range of well over 100 metres, typically over 1000 metres, and quite possibly in excess of 20 to 30 kilometres. Again, this is in contrast with a depth charge and a mortar bomb. Balanced with the ranging and target accuracy that launching from a gun barrel gives, the munition will be projectile-like, that is not including any self-propulsion, in contrast with a torpedo or similar. To summarise, then, the approach described above allows for relatively cheap, accurate, rapid, effective and efficient engagement of underwater targets at a significant range. One or more assemblies can be used to launch one or more munitions with such range and effectiveness, in contrast with the launching of depth charges, helicopters including such depth charges, or multiple torpedoes.

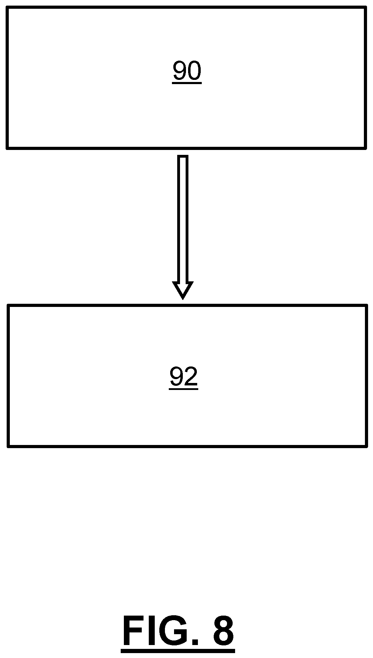

Figure 8 schematically depicts general principles associated with the method of launching a munition according to an example embodiment. As discussed above, the munition comprises an explosive charge, and a fuze. The munition is adapted to be launched, into the air, from a gun barrel, and enter a body of water. The fuze is adapted to trigger the explosives charge under the water. Accordingly, the method comprises launching the munition into the air, from a gun barrel 90. The launch is configured such that the munition is launched into the body of water 92, such that, as discussed above, the fuze may then be adapted to trigger the explosive charge under the water 92.

In the embodiments discussed above, a munition has been described and detailed. The munition includes an explosive charge. However, in accordance with alternative embodiments, many of the principles discussed above can still be taken advantage of, but without using a projectile including an explosive charge. That is, the above principles can be used to ensure that a projectile can be launched from a gun barrel and into a body of water, when the projectile is then arranged to interact or engage with an object in the water, but without necessarily including an explosive charge to disable or damage that object. In particular, the present disclosure additionally provides a reconnaissance projectile. The reconnaissance projectile is adapted to be launched, into the air, from a gun barrel, and then into contact with a body of water (onto the water surface, or to descend below the surface). Again then, the projectile may be launched at a high range, with a high degree of accuracy, relatively cheaply and quickly. The reconnaissance projectile is arranged to initiate a reconnaissance function when in contact with the body of water (which includes when impacting the water, when on the body of water, or, as above, typically when located under the surface of the water). The reconnaissance function could be anything of particular use in relation to the particular application, but would typically comprise emission and/or detection of a pressure wave in the body of water, in a manner similar to that discussed above in relation to Figure 6.

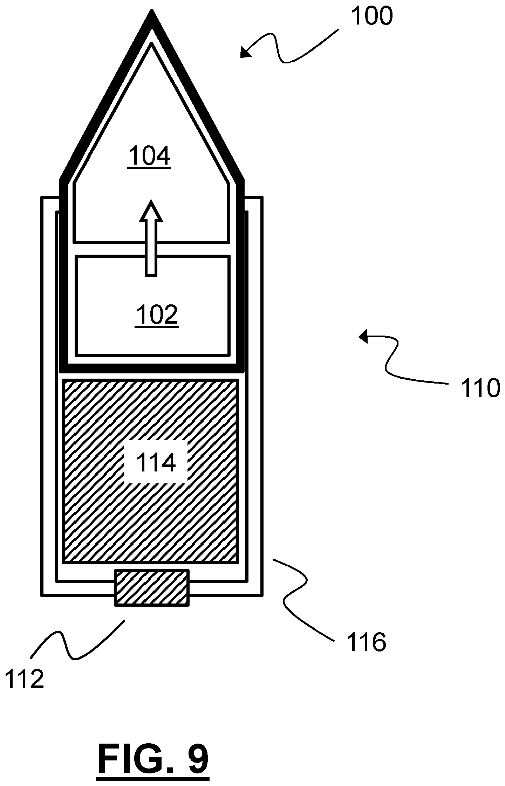

Figure 9 shows a reconnaissance projectile 100 in accordance with an example embodiment. The reconnaissance projectile 100 comprises a sensor 102. The sensor may be used to detect when the projectile 100 has come into contact with a body of water, and/or provide some other sensing functionality, for example one or more of the sensing or initiation criteria described above in relation to the munition. For example, the sensor 102 may be arranged to detect a particular passage of time, or a particular pressure change, or particular depth, and so on. The reconnaissance projectile 100 also comprises a transceiver 104, in this example. The transceiver may be arranged to emit and/or detect pressure waves in the body of water. The sensor 102 may initiate or process transmission or detection of the waves by transceiver 104. The sensor 102 might, instead or additionally, be or comprise a processor for processing implementing one or more of these functions.

Of course, it will be appreciated that the reconnaissance projectile may take one of a number of different forms, similar or different to that shown in Figure 9. Figure 9 is shown simply as a way of schematically depicting what such a projectile 100 might look like.

Much as with the munition described above, the reconnaissance projectile 100 might be used or fired or launched in isolation in some way. However, it is likely that the projectile, being explosively propelled, might take the form of, or form part of, an artillery shell 110. The artillery shell 110 might comprise much the same primer 112, explosive 114 and casing 116 as is already described above in relation to the arrangement of Figure 7. Referring back to Figure 9, a difference here is that the artillery shell 110 comprises a non-explosive projectile 100, as opposed to an explosive-carrying munition.

As might now be understood, it will be appreciated that some embodiments described above might be a combination of both explosive-concept, and reconnaissance-concept. For instance, it will be appreciated that the embodiments of Figures 5 and 6, at least, already have a degree of in-built reconnaissance, assisting in the initiation of the explosives charge.

It will be appreciated that the above explosive-recon examples could be used in isolation or combination. For instance, a reconnaissance projectile may be launched into a body of water in order to perform a reconnaissance function in relation to a target. That reconnaissance projectile may be provided with a transmitter for transmitting reconnaissance information back to the assembly from which the projectile was launched. This reconnaissance information or data may then be used in the programming of subsequently fired or launched explosive munitions according to example embodiments. Indeed, a volley of projectiles may be launched toward an underwater target in accordance with an example embodiment. One or more of those projectiles may be a munition as described herein, and one or more of those projectiles may be a reconnaissance projectile as described herein. The munitions projectile and the reconnaissance projectile may be arranged to communicate with one another. This means that, for instance, a first-fired reconnaissance projectile may enter the body of water and detect or otherwise the presence of a target, whereas a subsequently fired munitions projectile, which may be in the air or in the body of water at the same time as a reconnaissance projectile, may receive reconnaissance information from a reconnaissance projectile and use this in the initiation (or otherwise) of the explosive charge of the munitions projectile. This may mean that the munitions projectile does not need to carry sophisticated (or as sophisticated) transmission or sensing equipment, which could reduce overall cost or system complexity. Alternatively, the reconnaissance projectile described above could actually be a munitions projectile, for example one of those shown in relation to Figures 5 and 6. One or more munitions projectiles may be arranged to perform a reconnaissance functionality, but not necessarily initiate the explosive charge. Any acquired information on the target may be used to initiate the explosives charge of subsequently launched munitions projectiles. Or, or more reconnaissance projectiles may be arranged to perform an explosive function, but not necessarily use the reconnaissance function.

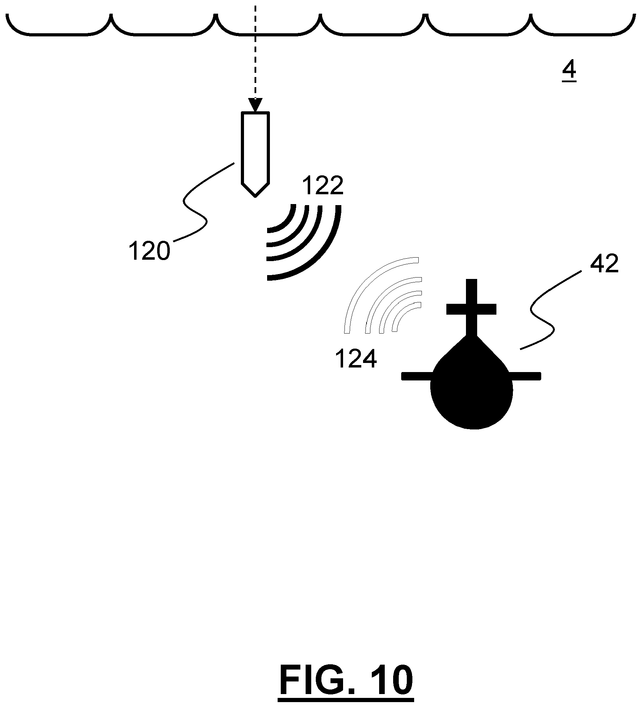

Figure 10 shows a projectile 120 with reconnaissance functionality 122, 124 entering the body of water 4 in the vicinity of the target 42. Reconnaissance functionality 122, 124 might include emission 122 and/or detection 124 of pressure waves. As discussed previously, the reconnaissance functionality 122, 124 may be completely independent of any explosives charge that the munition 120 is, or is not, provided with. That is, the projectile 120 might have explosive capability, reconnaissance functionality, or a combination of both. Different projectiles 120 launched into the water may have different combinations of such explosive/reconnaissance functionality.

Details of the explosive, fuze and general structure of the munition will vary depending on the required application. For example, the explosive charge could be cartridged or bagged charge. The casing could be reactive. Any explosive might be dependent on how the system is to be used, for example getting the munition near the target, or simply close enough. In the former, an explosive yielding a high bubble effect might be useful. In the latter, simply the level of blast might be more important.

As alluded to earlier in the disclosure, the disclosure also relates to very closely related concepts, but in submunition or sub-projectile form, as in a munition or projectile carried by and then expelled from another (carrier) projectile. This is because further advantages can be achieved, by applying all of the above principles, but in an assembly where the munition or reconnaissance projectile is more particularly a submunition of a munition assembly, or a reconnaissance sub-projectile of a reconnaissance projectile assembly. The submunition or reconnaissance sub-projectile is the object for which controlled entry into, and functionality in, the water is achieved, whereas a carrier of the assembly is simply a tool to get the submunition or reconnaissance sub-projectile to, or proximate to, a target location.

One of the main advantages is that the assembly as a whole, and particularly an outer carrier for carrying the submunition or sub-projectile, can be well or better configured for launch from a gun, with the range and accuracy that such configurations brings. For example, the assembly or the carrier can be bullet-shaped, ogive-shaped or roundly-shaped or tapering, in accordance with the typical shape of munitions. However, and at the same time, the submunition or sub-projectile can then have any desired shape, since the submunition or reconnaissance sub-projectile does not need to be configured for being fired from a gun. This means that the submunition or reconnaissance sub-projectile can then be more easily and readily configured for controlled descent toward and into the water, reducing or preventing damage that might otherwise occur if the munition was fired directly into the water.

Whereas expulsion of the submunition or reconnaissance sub-projectile from its carrier could be achieved underwater, greater benefits are achieved by expulsion in the air, since delicate submunition or reconnaissance sub-projectile components are then not subjected to the force of entry into the water from a natural ballistic, gun-launched, trajectory. Also, the submunition or reconnaissance sub-projectile will be travelling more slowly than a 'conventional' munition, and therefore the water entry shock loading should be reduced, accordingly.

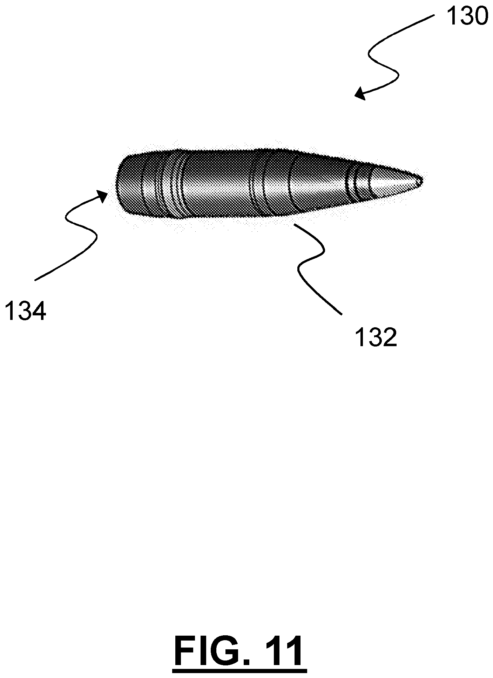

Figure 11 shows a munition assembly 130, arranged to be launched from a gun, much as with the munition of previous examples. The assembly 130 comprises a carrier 132 for a submunition 134. A nose of the carrier 132 is ogive-shaped or roundly-shaped or tapering, for greater aerodynamic performance. The carrier 132 comprises (which includes defines) a cavity in which the submunition 134 is located. The cavity retains and protects the submunition 134, and so shields the submunition 134 during launch and flight conditions of the assembly 130.

The assembly 130 may be launched and generally handled much as with the munition of earlier examples. However, in previous examples, controlled descent of the entire launched projectile, in the form of the (single-bodied) munition, is implemented. In the present examples, the submunition is expelled from its carrier, and controlled descent of the submunition is implemented, in the same manner as with the munition of previous examples. Again, then, the advantage of the present examples is that munition assembly can be tailored for launch and flight conditions, and the submunition can be tailored for descent and target engagement. The two-body approach allows for tailoring of a two-part problem.

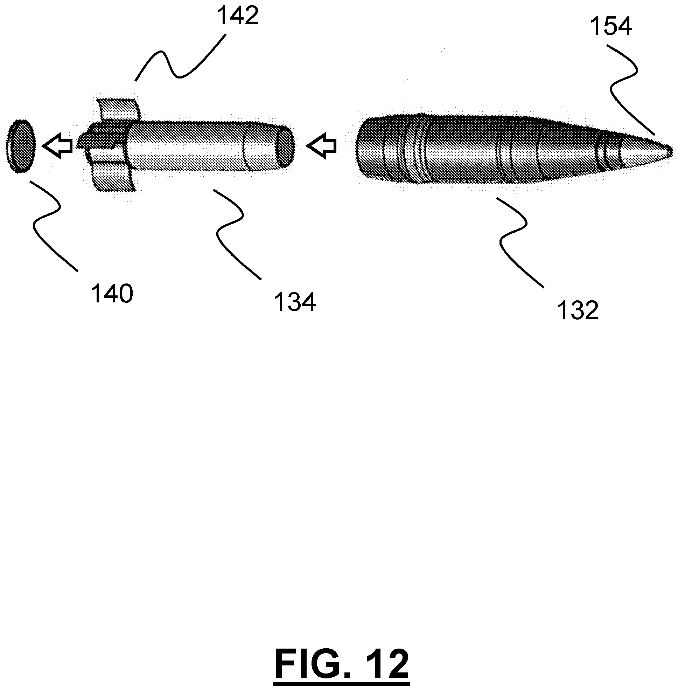

Figure 12 shows that the submunition 134, initially carried by the carrier 132 in the cavity, is arranged to be controllably expelled from the carrier. This might be achieved by use of a fuze and an expulsion charge, for example a carrier fuze 154 and a carrier expulsion charge. The carrier fuze 154 may operate on a timer, triggering the carrier expulsion charge to expel the submunition at or proximate to a target location, for example above a location of a target. As with the fuze of the (sub)munition, the carrier fuze may be programmed with a particular timing, or any other set of conditions, for example location-based activation, environmental sensing-based activation, and so on.

The submunition 134 is expelled via a rear end of the carrier 132. This is advantageous, as this might better ensure the maintenance of a predictable ballistic trajectory of the submunition 134 or carrier 132, or prevent the carrier 132 from impacting upon the submunition 134. As above, it is the submunition 134 for which slow, controlled descent is desirable, and so leaving the carrier 132 via a rear end allows for much more design and functional control, in implementing this.

The submunition may be arranged to be expelled from a rear end of the carrier via a closure 140. The closure might generally close or seal off the submunition 134 within the carrier 132. This might be useful for handling or safety reasons, or assist in shielding the submunition from launch and flight conditions. The closure 140 is arranged to be opened before or during expulsion of the submunition 134. This could be an active opening, for example via a controlled electronic or pneumatic switch or opening mechanism. However, it is likely to be simpler for this opening to be relatively passive or responsive, in that the closure 140 is arranged to open, for example via a shearing action, due to pressure of the expulsion charge on the opening, either directly, or indirectly via contact with the submunition 134 itself.

As with the munition of previous examples, the submunition 134 comprises a deployable configuration 142 that is arranged, when deployed, to slow the submunition 142 in the air, after expulsion from the carrier 132, and before entry to the water. The deployment could be active, for example based on sensing of air flow or submunition release, and an electrical or mechanical system actively deploying the configuration 142. However, a more passive, automatic deployment may be simpler to implement, and more reliable. For example, Figure 12 shows that wings or fins 142 might automatically deploy, to provide a degree of auto rotation to slow or further slow the munition 134 during its descent. The wings or fins 142 could be spring loaded, in a compressed or closed state, when in carrier 132, and then automatically uncompress or open when expulsion is implemented. Alternatively, the act of air flow during or after expulsion may force the wings or fins 142 to deploy.

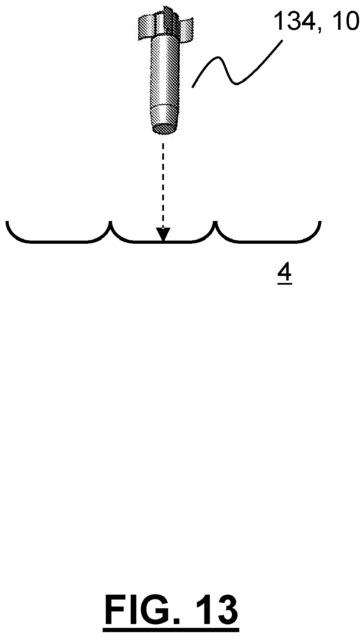

Figure 13 shows that the submunition 134 functions largely as the munition 10 of previous examples, descending toward and eventually onto or into the body of water 4, for engagement with a target. A submunition fuze is then adapted to trigger a submunition explosive charge, under water.

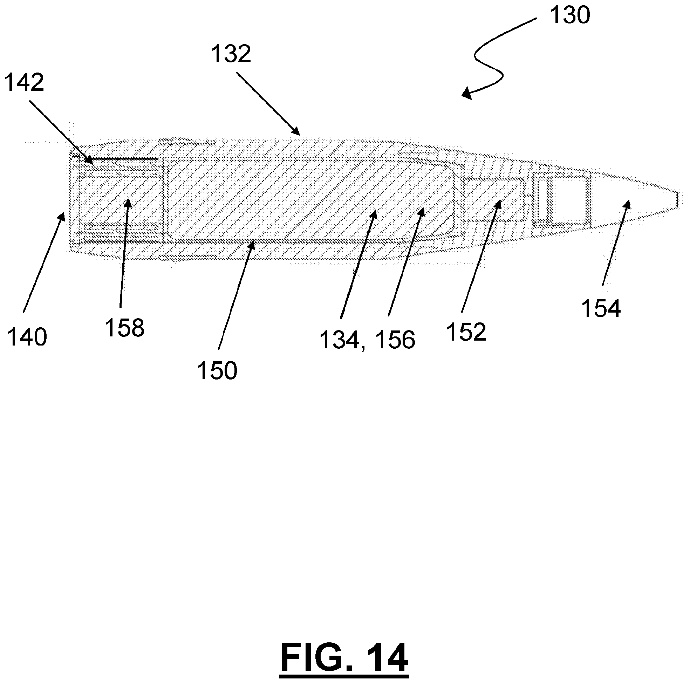

Figure 14 shows a more detailed view of the munition assembly 130. The munition assembly 130 is arranged to be launched from a gun. The assembly 130 comprises: a carrier 132 for a submunition 134. The carrier comprises a cavity 150 in which the submunition 134 is located. The carrier 132 may be, or may form, a (carrier) shell.

The submunition 134, carried by the carrier 132 in the cavity 150, is arranged to be controllably expelled from the carrier 134. The carrier 132 comprises a carrier expulsion charge 152 and a carrier fuze 154, the charge 152 being located in-between the submunition 134 and the fuze 154. The fuze is typically located in a nose of the assembly 130 or carrier 132. The carrier fuze 154 is adapted to trigger the carrier expulsion charge 152 to controllably expel the submunition 134 from the carrier 132, via the closure 140 at the rear of the carrier 132

The submunition 134 comprises wings or fins 142, arranged to auto-deploy upon expulsion, so as to slow down the descent of the submunition toward and into the water. Such a deployable configuration is typically located at a rear (in terms of eventual descent direction) end of the submunition, to maintain descent stability.

The submunition comprises a submunition (main) explosive charge 156, and a submunition fuze 158. The submunition fuze 158 is typically located at a rear (in terms of eventual descent direction) end of the submunition 134, to reduce the risk of damage to any sensitive components, during impact with the water. The munition assembly 130 is adapted to be launched, into the air, from a gun barrel, where the submunition 134 is then arranged to be controllably expelled from the carrier 132 and enter a body of water, and the submunition fuze 158 is adapted to trigger the submunition explosive charge 156 underwater.

Again, descent of the submunition, and activation of its fuze, may be implemented as described above in relation to the munition embodiments.

All of the principles described in relation to the submunition apply equally to a reconnaissance sub-projectile carried by a carrier of a reconnaissance projectile assembly. That is, the reconnaissance sub-projectile has the benefits of being carried and deployed like the submunition as described above, but also with the reconnaissance functionality, as described above.

Any of the projectiles described herein, including munitions, submunitions, or reconnaissance projectiles or sub-projectiles, may be arranged to communication with, ortransmit to, other objects. For example, munitions, submunitions, or reconnaissance projectiles or sub-projectiles, may be arranged to transmit a communication signal, external to and away from the submunition after entering the water, and optionally after a predetermined time period after entering the water; upon detection of a target sonar signature; upon detection of a target magnetic signature; upon detection of a target electric field signature; at a predetermined pressure under the water surface; at a predetermined depth under the water surface; at a predetermined salinity of water; at a predetermined temperature of water; at a predetermined speed-of-sound in water; or upon impact with a target under the water surface. The communication with, or transmission to, could be in relation to a remote weapon or platform, which could engage with the target depending on the communication or transmission. For instance, a submunition or reconnaissance sub-projectile may provide a warning shot, or a detection function, in advance of a more escalated engagement from the remote weapon or platform (e.g. a submarine, or torpedoes from a submarine).

In the above examples, a fuze has been discussed and described quite generally. In practice, that fuze may be connected to or form part of a fuze system, for example for use in arming or triggering the fuze and the related explosive charge. In those same above examples, it has been shown that obtaining an indication of depth of the munition is particularly useful, for example in triggering an explosive charge at a certain depth, or communicating from a reconnaissance projectile at a certain depth, or communicating the depth that the reconnaissance projectile is at.

As discussed further above, depth-sensing can be undertaken in one of a number of different ways, for example using a time of descent of the munition or projectile, or via a pressure sensor or similar. However, these approaches might not be desirable. In a crude approach, where timing is used, the timing may not be a particular accurate way of predicting or assuming a depth of the munition, for example due to currents in the water, or an otherwise unexpected rate of descent of the munition or projectile through the water. In many ways, then, a pressure sensor is desirable. However, pressure sensors may be too complex or costly to justify inclusion in a munition. Even if this is not the case, a pressure sensor located on the outside of the munition to obtain accurate reading of pressure may negatively affect the performance of the munition or projectile. For example, this external location of the pressure sensor might affect aerodynamic properties of the munition or projectile, or the path taken by the munition or projectile when underwater. Alternatively or additionally, this external pressure sensor will need to communicate with internal systems of the munition or projectile to implement the pressure-related functionality. In a simple way, this is likely to require perforations or other apertures in a housing of the projectile or munition. This is clearly undesirable in terms of having a negative impact on the structural integrity of the munition or projectile, and this integrity is crucial in light of the fact that the munition will likely be gun-launched and/or be subjected to extreme environmental conditions in launch, expulsion from a carrier, entry into water, and movements through the water. Alternatively, any sensor pressure may be wirelessly communicated to an interior of the munition or projectile, but then this increases costs and complexity, and still does not overcome the problem of the sensor being on the outside of the munition or projectile. If the sensor is located within the projectile or munition, it may be difficult or impossible to accurately measure the environmental pressure with existing approaches.

It is worth noting that while problems have been described in relation to a munition or projectile as described elsewhere herein, the very same or similar problems apply to any object moving through a fluid, whether that be an aircraft moving through air, or a submarine moving through water, and so on. However, it is envisaged that the problems are particularly prevalent in objects such as munitions and projectiles as described herein, which are exposed to significant, and significantly different, environmental conditions during use.

According to the present invention, it has been realised that the problems described above can be overcome in a subtle but powerful way. In particular, it has been realised that the problems can be overcome by not in fact measuring an environmental or ambient pressure directly, but instead measuring that hydrostatic pressure indirectly using the housing of the object that is suitable for moving through the fluid. In other words, the housing becomes at least a part of the sensor. In more detail, the present invention relates to an object for moving through a fluid. The object comprises an outer housing, arranged to be exposed to a hydrostatic pressure exerted by the fluid. The object further comprises a strain gauge, arranged to obtain an indication of the hydrostatic pressure. A first part of the strain gauge is arranged to be in contact with the outer housing. This is such that the strain gauge is arranged to obtain an indication of the hydrostatic pressure acting on the object by, in fact, obtaining an indication of the strain on the housing.

Again, then, the housing forms part of the pressure-sensing arrangement or configuration. This approach is subtle, but has many advantages. Firstly, this might reduce the number or complexity of components needed to sense pressure. This might also reduce costs. Also, and perhaps most importantly, this means that the pressure sensor can be located inside of the outer housing, which might typically be a sealed housing, and yet still be able to accurately detect hydrostatic pressure via the change in shape or size (i.e. strain on or of) the housing itself.

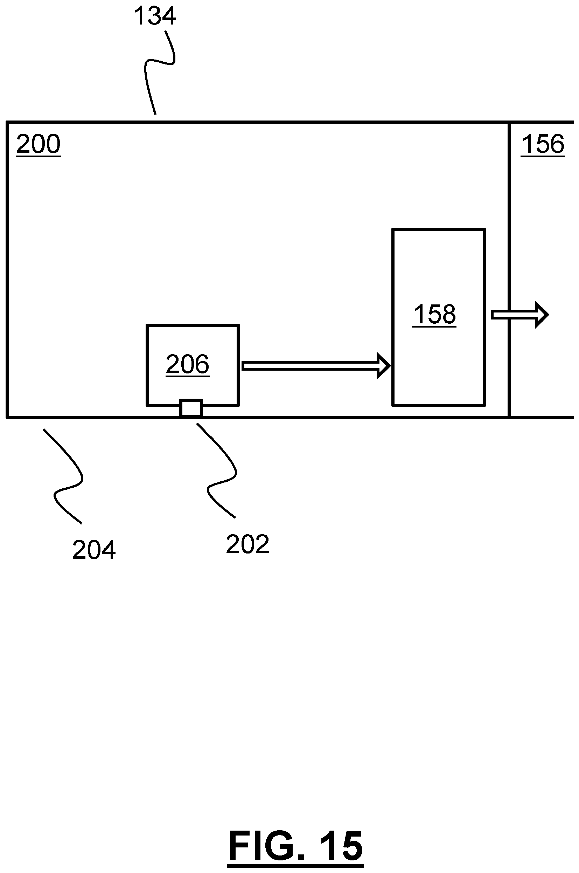

Figure 15 is a simplified view of part of the munition 134 of Figure 14. The Figure shows that the fuze 158 is, in fact, part of a fuze system 200. The overall system 200 may be used, for example, in terms of fuze arming or charge triggering functionality.

The system 200 is shown as comprising a strain gauge. At least a first part of the strain gauge 202 is arranged to be in contact with an outer housing 204 of the munition 134. A second part of the strain gauge 206 is provided to read or otherwise process interactions with the first part of the strain gauge 202. For instance, this might involve the second part 206 optically reading changes in periodicity or spacing of lines or markings of or provided by the first part of the strain gauge 202 (e.g. a grating), or the second part 206 electronically or optically reading, interrogating, or processing signals related to the functionality of the first part of the strain gauge 202. The second part 206 might be or form part of a system which is used to communicate with or in some way operate the fuze 158, described above. The parts may represent different functions of the same object, or same sensor. That is, the different parts do not need to be distinct structural components, spatially separated from one another.

Importantly, it can be seen that at least the first part of the strain gauge 202, and related components, are all included within the housing 204 of the submunition 134. No compromises need to be made in the structural integrity of the housing 204 by implementing this embodiment, for example by needing to drill holes in the housing 204 for the passage of wires or cables, or for the provision of optical windows or similar.

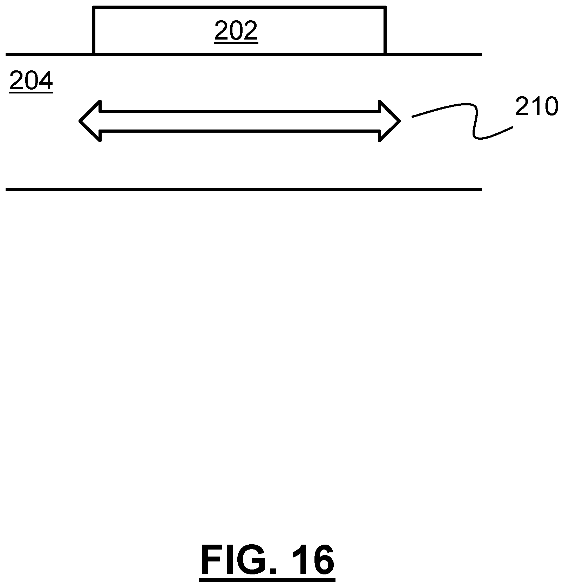

Figure 16 shows that the first part of the strain gauge 202 is in direct contact with an internal surface of the housing 204 of the munition. Simply to show the principles in more detail, it can be seen that a strain 210 on or of the housing 204 will directly impact the part of the gauge 202, thereby allowing pressure readings to be undertaken, accurately, from within the housing 204. Not only is the reading accurate, and contained within the munition, but the reading might also be undertaken in a relatively simply, effective and cheap manner. While this is generally advantageous for any kind of sensing, the invention is applied to a projectile, where simplicity and cost-effectiveness is perhaps key. In particular, for a munition projectile, it may be desirable to ensure that the bulk or majority of the munition is formed from an explosive charge, and thereby any weight or space savings, or reductions in costs and complexity for the components, is highly desirable.

While the part of the strain gauge that obtains an indication of strain of the housing is shown as being located on an internal surface of the housing, it is conceivable that the same or similar benefits could be achieved if the part of the strain gauge was in some way embedded within the material forming the housing. Benefits may also be achieved in terms of simplicity and cost-effectiveness if the strain gauge is located on an external surface of the housing, but this would then likely need wireless transmission of any sensed changes, to the system within the munition, perhaps increasing cost or complexity, or passage of wires or cables or similar through the housing, compromising structural integrity.

The sensing has been described as being useful for arming a fuze, or perhaps triggering an explosives charge. Other implementations are possible, for example the system could be arranged to simply transmit hydrostatic pressure information away from the object, particularly when the object is a reconnaissance projectile, or in some way used in a general reconnaissance functionality.

The strain gauge could be any suitable gauge, for example comprising a fibre-optic strain gauge, or a grating that is readable in an optical manner, and so on.

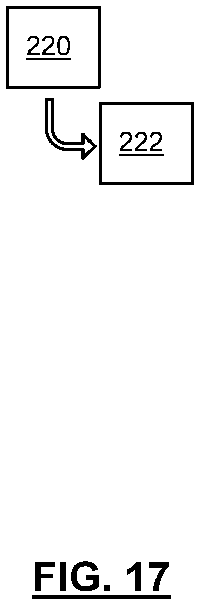

Figure 17 schematically depicts general methodology associated with the more apparatus-like principles already discussed in relation to Figures 15 and 16. In Figure 17, a method of obtaining an indication of a hydrostatic pressure on an object is depicted. The method comprises obtaining an indication of the hydrostatic pressure by obtaining an indication of a strain on an outer housing of the object (e.g. housing that is exposed to that pressure) 220. The method is undertaken using at least part of a strain gauge in contact with the outer housing 222. This might alternatively or additionally be defined as the method being undertaken using the outer housing of the object, in general.

Although a few preferred embodiments have been shown and described, it will be appreciated by those skilled in the art that various changes and modifications might be made without departing from the scope of the invention, as defined in the appended claims.

## Claims

1. A projectile for moving through a fluid (134), the projectile comprising:
an outer housing (204), arranged to be exposed to a hydrostatic pressure exerted by the fluid;
a strain gauge (202, 206), arranged to obtain an indication of the hydrostatic pressure,
wherein a first part (202) of the strain gauge is located within the outer housing, and arranged to be on or in an internal surface of the outer housing, such that the strain gauge is arranged to obtain an indication of the hydrostatic pressure by obtaining an indication of the strain on the housing, wherein the projectile comprises a system, and the strain gauge forms part of the system, the system being arranged to facilitate functionality of the projectile, the functionality being related to the hydrostatic pressure.

2. The projectile of any preceding claim, where the outer housing is a substantially sealed outer housing.

3. The projectile of any preceding claim, where the system is arranged to at least partially arm a fuze of the projectile, using the obtained indication of hydrostatic pressure.

4. The projectile of any preceding claim , wherein the system is arranged to trigger an explosive charge of the projectile, using the obtained indication of hydrostatic pressure.

5. The projectile of any preceding claim, wherein the system is arranged to transmit the obtained indication of hydrostatic pressure away from the projectile.

6. The projectile of any preceding claim, wherein the projectile is a munition.

7. The projectile of claim 6, wherein the munition is a submunition.

8. The projectile of any of claims 1 to 6, wherein the projectile is a reconnaissance projectile.

9. An assembly, the assembly comprising:
a carrier for a projectile, the carrier comprising a cavity in which the projectile is located;
and a projectile as claimed in any preceding claim, carried by the carrier in the cavity, the projectile arranged to be controllably expelled from the carrier, and wherein the assembly is adapted to be launched, and where the projectile is then arranged to be controllably expelled from the carrier; and the projectile is adapted to perform a hydrostatic pressure related function.

10. The assembly of claim 9, wherein the projectile is a submunition having a submunition fuze and/or a submunition explosive charge, and the fuze is arranged to be at least partially armed, or the submunition explosive charge is arranged to be triggered, dependent on the obtained indication of the hydrostatic pressure.

11. The assembly of claim 9 or claim 10, wherein the assembly is adapted to be launched, into the air, from a gun barrel, and optionally the submunition is then arranged to be controllably expelled from the carrier and enter a body of water; and the projectile is optionally adapted to perform a hydrostatic pressure related function when in the water, optionally when a submunition, a submunition fuze is adapted to trigger the submunition explosive charge under water.

12. A method of obtaining an indication of a hydrostatic pressure on a projectile, the method comprising:
obtaining the indication of the hydrostatic pressure by obtaining an indication of a strain on an outer housing of the projectile (220), using at least part of a strain gauge located within the outer housing and on or in an internal surface of the outer housing (222), and facilitating functionality of the projectile, the functionality being related to the hydrostatic pressure.

## Patentansprüche

1. Projektil zum Bewegen durch eine Flüssigkeit (134), das Projektil umfassend:
ein Außengehäuse (204), das angeordnet ist, um einem hydrostatischen Druck, der durch die Flüssigkeit ausgeübt wird, ausgesetzt zu sein; einen Dehnungsmessstreifen (202, 206), der angeordnet ist, um eine Anzeige des hydrostatischen Drucks zu erhalten, wobei sich ein erster Teil (202) des Dehnungsmessstreifens innerhalb des Außengehäuses befindet und angeordnet ist, um auf oder in einer Innenoberfläche des Außengehäuses zu sein, derart, dass der Dehnungsmessstreifen angeordnet ist, um eine Anzeige des hydrostatischen Drucks durch Erhalten einer Anzeige der Dehnung auf dem Gehäuse zu erhalten, wobei das Projektil ein System umfasst und der Dehnungsmessstreifen einen Teil des Systems bildet, wobei das System angeordnet ist, um eine Funktionalität des Projektils zu ermöglichen, wobei sich die Funktionalität auf den hydrostatischen Druck bezieht.

2. Projektil nach einem der vorstehenden Ansprüche, wobei das Außengehäuse ein im Wesentlichen abgedichtetes Außengehäuse ist.

3. Projektil nach einem der vorstehenden Ansprüche, wobei das System angeordnet ist, um einen Zünder des Projektils unter Verwendung der erhaltenen Anzeige des hydrostatischen Drucks mindestens teilweise scharf zu machen.

4. Projektil nach einem der vorstehenden Ansprüche, wobei das System angeordnet ist, um, unter Verwendung der erhaltenen Anzeige des hydrostatischen Drucks, eine Sprengladung des Projektils auszulösen.

5. Projektil nach einem der vorstehenden Ansprüche, wobei das System angeordnet ist, um die erhaltene Anzeige des hydrostatischen Drucks von dem Projektil weg zu übertragen.

6. Projektil nach einem der vorstehenden Ansprüche, wobei das Projektil eine Munition ist.

7. Projektil nach Anspruch 6, wobei die Munition eine Submunition ist.

8. Projektil nach einem der Ansprüche 1 bis 6, wobei das Projektil ein Aufklärungsprojektil ist.

9. Baugruppe, die Baugruppe umfassend:
einen Träger für ein Projektil, der Träger umfassend einen Hohlraum, in dem sich das Projektil befindet; und ein Projektil nach einem der vorstehenden Ansprüche, das durch den Träger in dem Hohlraum getragen wird, wobei das Projektil angeordnet ist, um aus dem Träger steuerbar ausgestoßen zu werden, und wobei die Baugruppe angepasst ist, um abgeschossen zu werden, und wobei das Projektil dann angeordnet ist, um aus dem Träger steuerbar ausgestoßen zu werden; und das Projektil angepasst ist, um eine Funktion, die sich auf einen hydrostatische Druck bezieht, durchzuführen.

10. Baugruppe nach Anspruch 9, wobei das Projektil eine Submunition ist, die einen Submunitionszünder und/oder einer Submunitionssprengladung aufweist, und der Zünder angeordnet ist, um mindestens teilweise scharf gemacht zu werden, oder die Submunitionssprengladung angeordnet ist, um abhängig von der erhaltenen Anzeige des hydrostatischen Drucks ausgelöst zu werden.

11. Baugruppe nach Anspruch 9 oder 10, wobei die Baugruppe angepasst ist, um aus einem Gewehrlauf in die Luft abgeschossen zu werden, und optional die Submunition dann angeordnet ist, um aus dem Träger steuerbar ausgestoßen zu werden und in ein Gewässer einzudringen; und das Projektil optional angepasst ist, um eine Funktion, die sich auf einen hydrostatische Druck bezieht, durchzuführen, wenn es in dem Wasser ist; optional, wenn eine Submunition, ein Submunitionszünder angepasst ist, um, die Submunitionssprengladung unter Wasser auszulösen.

12. Verfahren zum Erhalten einer Anzeige eines hydrostatischen Drucks auf ein Projektil, das Verfahren umfassend:
Erhalten der Anzeige des hydrostatischen Drucks durch Erhalten einer Anzeige einer Dehnung an einem Außengehäuse des Projektils (220) unter Verwendung von mindestens einem Teil eines Dehnungsmessstreifens, der sich innerhalb des Außengehäuses und an oder in einer Innenoberfläche des Außengehäuses (222) befindet, und Ermöglichen der Funktionalität des Projektils, wobei die Funktionalität sich auf den hydrostatischen Druck bezieht.

## Revendications

1. Projectile destiné à se déplacer dans un fluide (134), le projectile comprenant :
un boîtier extérieur (204), agencé pour être exposé à la pression hydrostatique exercée par le fluide ; une jauge de contrainte (202, 206), agencée pour obtenir une indication de la pression hydrostatique, dans lequel une première partie (202) de la jauge de contrainte est située à l'intérieur du boîtier extérieur, et agencée pour être sur ou dans une surface interne du boîtier extérieur, de sorte que la jauge de contrainte est agencée pour obtenir une indication de la pression hydrostatique en obtenant une indication de la contrainte sur le boîtier, dans lequel le projectile comprend un système, et la jauge de contrainte fait partie du système, le système étant agencé pour faciliter la fonctionnalité du projectile, la fonctionnalité étant liée à la pression hydrostatique.

2. Projectile selon l'une quelconque revendication précédente, dans lequel le boîtier extérieur est un boîtier extérieur substantiellement scellé.

3. Projectile selon l'une quelconque revendication précédente, où le système est agencé pour armer au moins partiellement une fusée du projectile, à l'aide de l'indication obtenue de la pression hydrostatique.

4. Projectile selon l'une quelconque revendication précédente, dans lequel le système est agencé pour déclencher une charge explosive du projectile, à l'aide de l'indication obtenue de la pression hydrostatique.

5. Projectile selon l'une quelconque revendication précédente, dans lequel le système est agencé pour transmettre l'indication obtenue de la pression hydrostatique loin du projectile.

6. Projectile selon l'une quelconque revendication précédente, dans lequel le projectile est une munition.

7. Projectile selon la revendication 6, dans lequel la munition est une sous-munition.

8. Projectile selon l'une quelconque des revendications 1 à 6, dans lequel le projectile est un projectile de reconnaissance.

9. Ensemble, l'ensemble comprenant :
un support pour un projectile, le support comprenant une cavité dans laquelle est située le projectile ; et un projectile tel que revendiqué selon l'une quelconque revendication précédente, porté par le support dans la cavité, le projectile étant agencé à être expulsé de manière contrôlée du support, et dans lequel l'assemblage est adapté pour être lancé, et dans lequel le projectile est alors disposé à être expulsé de manière contrôlée du support ; et le projectile est adapté pour remplir une fonction liée à la pression hydrostatique.

10. Ensemble selon la revendication 9, dans lequel le projectile est une sous-munition dotée d'une fusée de sous-munition et/ou d'une charge explosive de sous-munition, et la fusée est agencée pour être au moins partiellement armée, ou la charge explosive de sous-munition est agencée pour être déclenchée, en fonction de l'indication obtenue de la pression hydrostatique.

11. Ensemble selon la revendication 9 ou la revendication 10, dans lequel l'ensemble est adapté pour être lancé dans l'air à partir d'un cylindre de canon, et éventuellement la sous-munition est alors agencée pour être expulsée de manière contrôlable à partir du support et pénétrer dans une étendue d'eau ; et le projectile est éventuellement adapté pour effectuer une fonction liée à la pression hydrostatique lorsqu'il est dans l'eau, éventuellement lorsqu'une sous-munition, une fusée de sous-munition est adaptée pour déclencher la charge explosive de sous-munition sous l'eau.

12. Procédé destiné à obtenir une indication de la pression hydrostatique sur un projectile, le procédé comprenant :
l'obtention de l'indication de la pression hydrostatique en obtenant une indication d'une contrainte sur un boîtier extérieur du projectile (220), à l'aide d'au moins une partie d'une jauge de contrainte située dans le boîtier extérieur et sur ou dans une surface interne du boîtier extérieur (222), et en facilitant la fonctionnalité du projectile, la fonctionnalité étant liée à la pression hydrostatique.
